# EUROPEAN PATENT APPLICATION

(11) **EP 1 972 568 A1**
(43) Date of publication of application: **24.09.2008**
(21) Application number: 08102705.4
(22) Date of filing: 18.03.2008
(51) Int. Cl.: B65D 25/10, B65D 27/14, B65D 81/03, B65D 85/57, B65D 27/02

(54) **Flexible media packaging**

(30) Priority: 19.03.2007 US 895697 P; 07.08.2007 US 954553 P; 31.08.2007 US 969550 P; 18.09.2007 US 973416 P; 17.10.2007 US 980699 P; 12.03.2008 US 47172
(71) Applicant: National Envelope Corporation, Uniondale, NY 11553 (US)
(72) Inventor: Cavell, Steve, Pewee Valley, GA 40056 (US); Schlich, John, Atlanta, GA 30339 (US)
(74) Representative: Jones, Keith William

(57) **Abstract**

A packaging apparatus (10) includes a flexible insert (14) and a sealable wrapper (12). The flexible insert includes: a body (144) having a first face and a second face opposite the first face; a first flap (140) at a first edge (1441) of the body; and a second flap (142) at a second edge (1442) of the body, the second edge located opposite the first edge. The sealable wrapper includes: a first panel (121); and a second panel (122). The sealable wrapper is sized to enclose the flexible insert. The first face of the body of the flexible insert is configured to engage the first panel (121) of the sealable wrapper upon insertion of the flexible insert to the sealable wrapper. The first and second flaps (141,142) are configured to, upon the insertion, swing from the body of the flexible insert to engage the second panel (122) of the sealable wrapper such that a thickness of the packaging apparatus becomes substantially uniform.

## Description

### CROSS-REFERENCE TO RELATED PATENT APPLICATIONS

This application claims priority from U.S. Provisional Patent Application No. 60/895,697, filed on March 19, 2007, U.S. Provisional Patent Application No. 60/954,553, filed on August 7, 2007, U.S. Provisional Patent Application No. 60/969,550, filed on August 31, 2007, U.S. Provisional Patent Application No. 60/973,416, filed on September 18, 2007, U.S. Provisional Patent Application No. 60/980,699, filed on October 17, 2007, and U.S. Provisional Patent Application No. 12/047,172, filed on March 12, 2007, each of which is incorporated herein by reference in its entirety.

### BACKGROUND OF THE INVENTION

This invention relates generally to the field of packaging and, in particular, postal packaging for media items including, but not limited to, compact disc (CD) jewel cases and digital versatile disc (DVD) storage cases and, more generally, for other items to be packaged for mailing or shipping.

Envelope manufacturing machines which fold the closure, side and bottom flaps of envelope blanks are known. Such machines, which manufacture envelopes in a production-line environment, are also known. One such machine includes an apparatus which automatically applies gum to predetermined portions of the envelope blank during the manufacturing process. The gum is usually applied to the side seams and/or flaps of the envelope blank such that the side seams and/or flaps can be sealed to form an enclosure. A window patch of a clear material is also known to be adhered to the inside of the envelope during the production line process.

It is known to create the envelope out of a soft, cushioning material to protect a product enclosed inside the envelope. Such an envelope may not meet the size or flexibility requirements specified by the United States Postal Service (USPS) to qualify as a piece of Automation Flat mail (see, for example, Part 301 of the Mailing Standards of the United States Postal Service, Domestic Mail Manual (DMM), the content of which is incorporated herein by reference in its entirety). For example, section 1.4 of Part 301 of the DMM provides that flat-size mailpieces must be uniformly thick such that any bumps, protrusions, or other irregularities do not cause a variance greater than 0.635 cm (0.25 inch) in thickness.

In addition, such an envelope may not prevent the product from moving inside the envelope, for example, during transport of the envelope. Further, it might not be possible to form a stable stack of such envelopes (e.g., a stack including 10 or more such envelopes). That is, it might not be possible to form such a stack to remain standing without toppling or falling over.

It is known to mail a product in a box made of cardboard. However, such a box is classified as a USPS Parcel or a Non-Machinable Flat and, therefore, is subject to the postage rates applicable for either of these two classes, which are higher than the corresponding rates for Automation Flats.

It is known to create an envelope with an expandable side seam to accommodate a CD-type product. However, such an envelope may not meet the USPS specifications for Automation Flats and/or may not adequately protect the product. Such an envelope is described in U.S. Patent No. 6,227,444 to Makofsky et al., the content of which is incorporated by reference in its entirety.

### SUMMARY OF THE INVENTION

According to one embodiment, a packaging apparatus includes a flexible insert and a sealable wrapper. The flexible insert includes: a body having a first face and a second face opposite the first face; a first flap at a first edge of the body; and a second flap at a second edge of the body, the second edge of the body located opposite the first edge. The sealable wrapper includes: a first panel; and a second panel. The sealable wrapper is sized to enclose the flexible insert. The first face of the body of the flexible insert is configured to engage the first panel of the sealable wrapper upon insertion of the flexible insert to the sealable wrapper. The first and second flaps of the flexible insert are configured to, upon the insertion, swing from the body of the flexible insert to engage the second panel of the sealable wrapper such that a thickness of the packaging apparatus becomes substantially uniform.

According to another embodiment, a flexible insert includes a body having a first face and a second face opposite the first face, a first flap at a first edge of the body, and a second flap at a second edge of the body, the second edge of the body located opposite the first edge. The flexible insert is configured to be inserted to an envelope including a first interior face and a second interior face opposite the first interior face, the envelope having a variable thickness. The first face of the body of the flexible insert is configured to engage the first interior face of the envelope upon insertion of the flexible insert to the envelope. The first and second flaps of the flexible insert are configured to, upon the insertion, swing from the body of the flexible insert to contact the second interior face of the sealable envelope such that the thickness of the envelope becomes substantially uniform.

According to another embodiment, a packaging apparatus includes a sealed wrapper and a flexible insert. The sealed wrapper includes a first panel and a second panel. The sealed wrapper encloses the flexible insert and has a substantially uniform thickness. The flexible insert includes a body having a first face engaging the first panel of the sealed wrapper and a second face opposite the first face, a first flap at a first edge of the body and engaging the second panel of the sealed wrapper to form a first acute angle with the body, and a second flap at a second edge of the body located opposite the first edge, and engaging the second panel of the sealed wrapper to form a second acute angle with the body.

### BRIEF DESCRIPTION OF THE DRAWINGS

Fig. 1a is a back view of a packaging apparatus according to one embodiment showing contents of the packaging apparatus in phantom.

Fig. 1b is a perspective view of the packaging apparatus of Fig. 1a.

Fig. 2 is a drawing of an envelope blank for formation of a wrapper according to one embodiment.

Fig. 3a is a drawing of a flexible insert according to one embodiment.

Fig. 3b is a drawing of a flexible insert according to another embodiment.

Fig. 3c is a drawing of a flexible insert according to another embodiment.

Fig. 4 is a drawing of a flexible insert according to another embodiment.

Fig. 5 is a cross-sectional view of a rigid item joined with a flexible insert according to one embodiment.

### DETAILED DESCRIPTION OF THE PREFERRED EMBODIMENTS

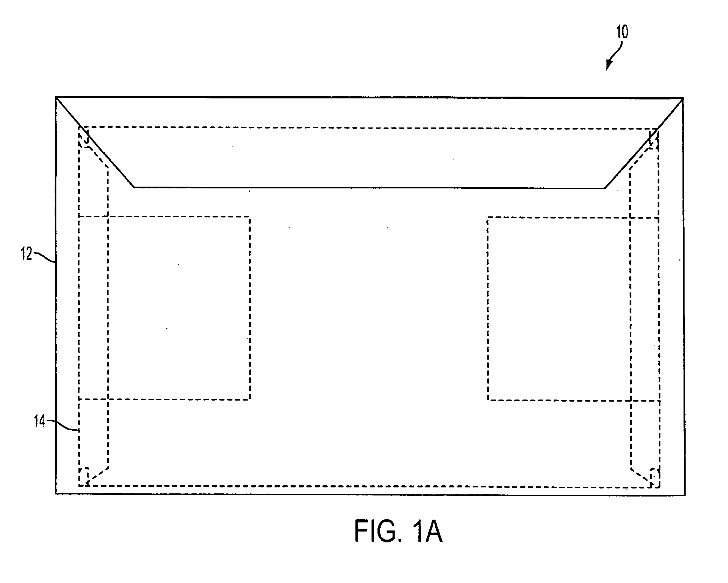

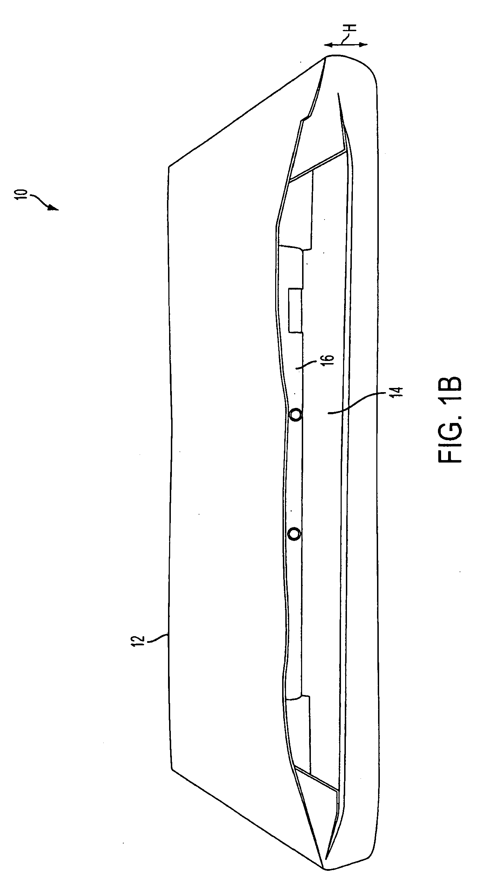

According to one embodiment, with reference to Figs. 1a and 1b, a completed packaging 10 for the mailing of a certain item (or items) 16 includes a wrapper 12 and an insert 14. The insert 14 is inserted to the wrapper 12, as will be described in more detail below, to form the completed packaging 10. With reference to Fig. 1b, the completed packaging 10 has a uniform thickness H, in compliance with section 1.4 of Part 301, titled "Physical Standards," of the Mailing Standards of the United States Postal Service (USPS), Domestic Mail Manual (DMM), the content of which is incorporated herein by reference in its entirety. Further, as provided in section 3.2.1(d) of Part 301 of the DMM, the minimum thickness of an Automation Flat is 0.009 inch, and the maximum thickness of an Automation Flat is 0.75 inch. With reference to Fig. 1b, rigid item 16 (such as, but not limited to, a DVD storage case as shown in Fig. 1b) is located on the insert 14.

The insert 14 may be inserted to the wrapper 12 either via automated production equipment or manually. Because the completed packaging 10 meets the requirements provided in Part 301 of the DMM, it may be accepted by the USPS for delivery at a discounted rate.

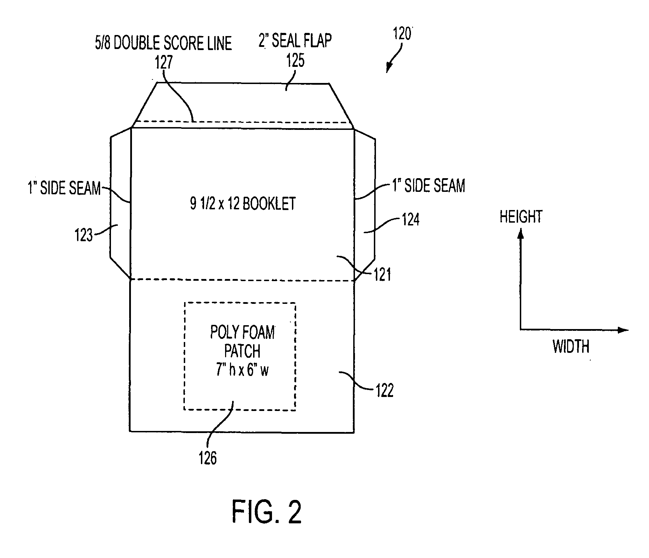

According to one embodiment, with reference to Fig. 2, the wrapper 12 is formed of a booklet-style envelope blank 120. The envelope blank 120 includes a panel 121, a panel 122, a side seam 123, a side seam 124, and a seal flap 125. According to a further embodiment, the envelope blank 120 also includes a pliable pad 126 placed on the panel 122.

The panels 121 and 122, the seams 123 and 124, and the flap 125 are constructed of a material that is suitable for processing by the USPS. The material is suitable also for processing by known envelope-manufacturing equipment and is sufficiently strong such that the completed envelope can supportably contain a product weighing approximately 4 to 5.6 ounces. Such materials include, but are limited to, Kraft papers, Tyvek, and certain laminates.

When the panel 122 is folded to overlie the panel 121, the seams 123 and 124 may be affixed to the panel 122 using an adhesive known in the art of envelope manufacturing and capable of maintaining the fastening of the seams 123, 124 to the panel 122 during normal usage of the completed envelope and processing and transportation of the completed envelope by the USPS.

According to one embodiment, the flap 125 at the top of the envelope blank 120 is double-scored at a fold position 127 where the flap 125 is joined to the panel 121. According to one embodiment, the score lines are spaced from each other by 0.625 inch such that the flap 125 can be folded over more easily before it is affixed to the panel 122 to enclose one or more items stored in the wrapper 12. An adhesive is placed along the top edge of the flap 125 for allowing automated insertion equipment to remoisten and seal the wrapper once the item (or items) has been inserted to the wrapper 12.

In embodiments including the pad 126, the pad 126 is made of a cushioning material including, but not limited to, foam. The cushioning material is sufficiently soft and flexible to protect the item (or items) inserted into the wrapper 12 from, for example, external forces applied to the panel 121, 122. The pad may be approximately 0.1 inch in thickness and may be capable of being adhered to a portion of the panel 122 by a known envelope-manufacturing machine. The pad 126 may be adhered to the portion of the panel 122 using an adhesive known in the art of envelope manufacturing such that sufficient adhesive strength is provided and such that the fastening of the pad 126 to the panel 122 is maintained during normal and routine use of the wrapper 12. For example, the pad 126 is affixed during the manufacturing process using an adhesive sufficiently strong to hold the pad 126 securely onto an interior surface of the wrapper 12 while the wrapper 12 goes through a routine and typical life cycle, as described herein.

In one embodiment, the pad 126 is formed of a reinforcement material that may or may not be cushioning. The reinforcement material may include, but is not limited to, Tyvek. The reinforcement material should be sufficiently strong to protect the item (or items) inserted into the wrapper 12 from tearing.

One skilled in the art will appreciate that, in other embodiments, the envelope blank 120 may not include a pad 126, which is formed of cushioning and/or reinforcement material. For example, a blank 120 that does not include a pad 126 may be used in a situation where a non-fragile (or less fragile) item (or items) is shipped.

With reference to the embodiment shown in Fig. 2, the panels 121, 122 measure approximately 9.5 inches in height and approximately 12 inches in width. Such dimensions are suitable for packaging of items including, but not limited to, compact disc (CD) jewel cases. The side seams 123, 124 are approximately 1 inch in width. The flap 125 is approximately 2 inches in length. In embodiments of the blank that include the pad 126, the pad 126 measures approximately 7 inches in height and approximately 6 inches in width.

According to one embodiment, the panels 121, 122 measure approximately 11.5 inches in height and approximately 12 inches in width. Such dimensions are suitable for packaging of items including, but not limited to, digital versatile disc (DVD) storage cases. (Here, the storage case is positioned relative to the panel 121, 122 such that the longer edge of the case extends along the height of the panel 121, 122.) The side seams 123, 124 are approximately 1 inch in width. The flap 125 is approximately 2 inches in length. In embodiments of the blank that include the pad 126, the pad 126 measures approximately 7 inches in height and approximately 6 inches in width.

According to another embodiment, the panels 121, 122 measure approximately 10 inches in width and approximately 13 inches in length. Such dimensions are suitable for packaging of items such as digital versatile disc (DVD) storage case. (Here, the storage case is positioned relative to the panel 121, 122 such that the longer edge of the case extends along the length of the panel 121, 122.) The side seams 123, 124 are approximately 1 inch in width. The flap 125 is approximately 2 inches in length. In embodiments including the pad 126, the pad 126 measures approximately 6 inches in height and approximately 7 inches in width.

With reference to the panels 121, 122, although certain dimensions are described above (e.g., 9.5 inches by 12 inches, 11.5 inches by 12 inches, and 10 inches by 13 inches), one skilled in the art will appreciate that booklet-type envelope blanks having panel dimensions ranging from 5 inches to 12 inches in height and 6 inches to 15 inches in width are also contemplated.

Although certain embodiments of the wrapper 12 have been described as being formed of a booklet-style envelope blank 120, embodiments of the wrapper 12 are not limited thereto. For example, in other embodiments, cellophane or a similar material may be used to wrap an item (or items) for mailing. If desired, such a wrapper may also enclose a pad similar to pad 126, which was described above.

In other embodiments, the wrapper 12 may be a welded side seam pouch similar in design and manufacture to a condiment packet containing a serving-sized quantity of a condiment such as sugar. Such a pouch could be used to enclose an item (or items) for mailing. If desired, such a pouch may also enclose a pad similar to pad 126, which was described above. Manufacture of such side seam pouches is known in the art and, as such, will not be discussed in more detail below.

In yet other embodiments, any type of containing device that complies with the provisions of Part 301 of the DMM may constitute the wrapper 12.

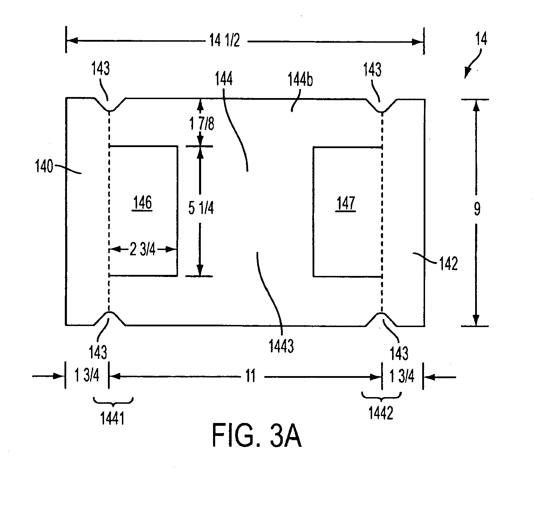

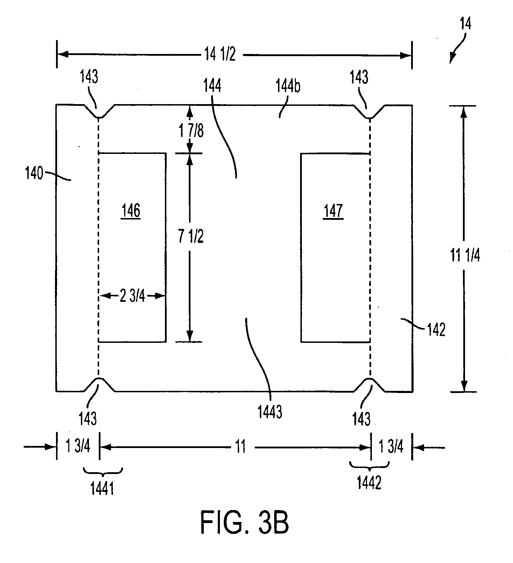

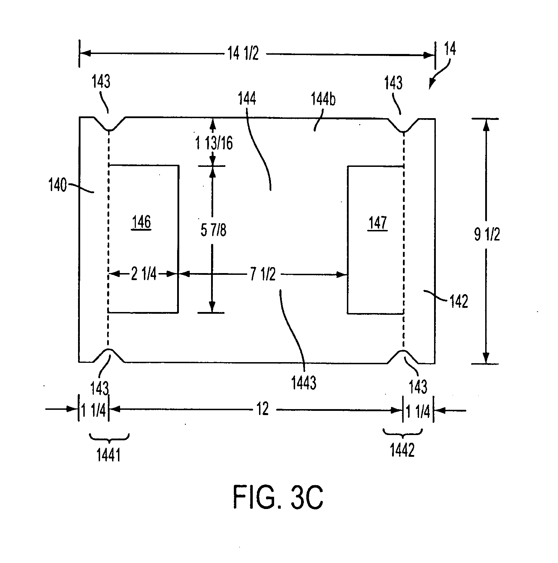

With reference to Figs. 3a, 3b, and 3c, embodiments of the insert 14 are shown. The insert 14 is made of a flexible material that includes, but is not limited to, cardboard, foam (such as, but not limited to, recyclable green padded foam, such as the Green Cell biodegradable engineered foam sold by KTM Industries of Lansing, Michigan), plastic, wood, and the like. In embodiments including cardboard, the cardboard may include, but is not limited to, F Flute type board and/or 29 ECT/ E Flute cardboard.

The insert 14 includes a body 144. The body 144 has a face 144a (not shown) and a face 144b opposite the face 144a. In one embodiment, as will be described in more detail below, an indentation or depression is located on the face 144b of the body 144. A flap 140 is located at an edge 1441 of the body 144, and a flap 142 is located at an opposite edge 1442 of the body 144. In one embodiment, the flaps 140, 142 are generally rectangular in shape.

In an exemplary embodiment, the edge 1441 and/or the edge 1442 are/is at least partially perforated such that the flap 140, 142 is joined to the body 144 at the perforated portion of the edge 1441, 1442. In such an embodiment, the perforations are for facilitating folding of the flap 140, 142 relative to the body 144, as will be described in more detail below. In other embodiments, such perforations are not included.

In one embodiment, a notch 143 generally having the shape of the letter 'V' is located at one end of the edge 1441 and between the body 144 and the flap 140. In one embodiment, notches 143 are located at both ends of the edge 1441 and between the body 144 and the flap 140. Similarly, in one embodiment, a notch 143 generally having the shape of the letter 'V' is located at one end of the edge 1442 and between the body 144 and the flap 142. In one embodiment, notches 143 are located at both ends of the edge 1442 and between the body 144 and the flap 142. The notches 143 are for facilitating folding of the flap 140, 142 relative to the body 144, as will be described in more detail below.

In one embodiment, the body 144 has an opening 146 extending through the body. The opening 146 is located adjacent to the flap 140. In another embodiment, the body 144 has openings 146 and 147 extending through the body. The opening 146, 147 is located adjacent to the flap 140, 142. In one embodiment, the opening 146, 147 is generally rectangular in shape. The opening 146, 147 is for lending additional flexibility to the insert 14 and for facilitating folding of the flap 140, 142 relative to the body 144, as will be described in more detail below.

As will be described in more detail below, in those embodiments including both openings 146, 147, a rigid item including, but not limited to, CD jewel cases and DVD storage cases will be disposed on a generally central portion 1443 of the body 144 between the openings 146, 147.

In the embodiment shown in Fig. 3a, the body 144 of the insert 14 is approximately 9 inches in height and approximately 11 inches in width. The insert 14 has a thickness of 0.1 inch. The flap 140, 142 is approximately 9 inches in height and approximately 1.75 inches in width. Further, the opening 146, 147 is approximately 5.25 inches in height and approximately 2.75 inches in width. The opening 146, 147 is spaced 1.825 inches away from top and bottom edges of the body 144. The insert of Fig. 3a is sized such that it can be fully inserted to a wrapper 12 measuring 9.5 inches by 12 inches, which was described above.

In the embodiment shown in Fig. 3b, the body 144 of the insert 14 is approximately 11.25 inches in height and approximately 11 inches in width. The insert 14 has a thickness of 0.1 inch. The flap 140, 142 is approximately 11.25 inches in height and approximately 1.75 inches in width. Further, the opening 146, 147 is approximately 7.5 inches in height and approximately 2.75 inches in width. The opening 146, 147 is spaced 1.875 inches away from top and bottom edges of the body 144. The insert of Fig. 3b is sized such that it can be fully inserted to a wrapper 12 measuring 11.5 inches by 12 inches, which was described above.

In the embodiment shown in Fig. 3c, the body 144 of the insert 14 is approximately 9.5 inches in height and approximately 12 inches in width. The insert 14 has a thickness of 0.1 inch. The flap 140, 142 is approximately 9.5 inches in height and approximately 1.25 inches in width. Further, the opening 146, 147 is approximately 5.875 inches in height and approximately 2.25 inches in width. The opening 146, 147 is spaced 1.9375 inches away from top and bottom edges of the body 144. The insert of Fig. 3c is sized such that it can fully inserted to a wrapper 12 measuring 10 inches by 13 inches, which was described above.

One skilled in the art will appreciate that the height and width dimensions of the insert 14 may vary according to the height and width dimensions of the selected wrapper 12. Generally, the height and width dimensions of the insert 14 are selected to be approximately 0.5 inches less than the corresponding dimensions of the selected wrapper 12 such that the insert can be inserted to the wrapper more easily using, for example, automated insertion equipment.

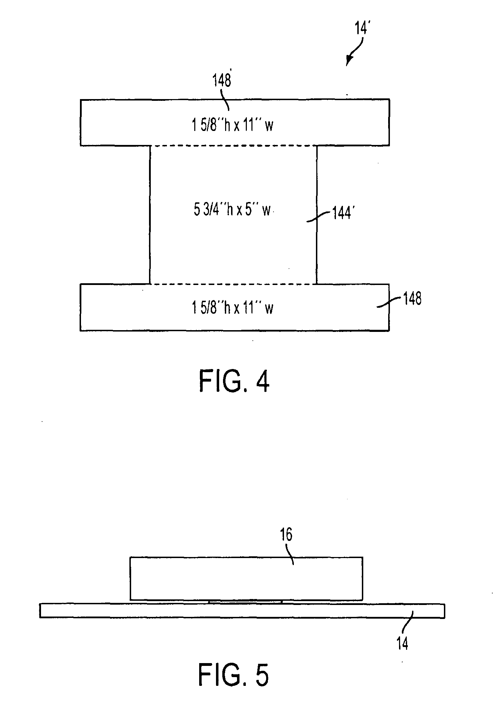

With reference to Fig. 4, according to another embodiment, the insert 14' has the general shape of the letter 'H'. The body 144' of the insert measures 5.75 inches in height and 5 inches in width. The insert 14' also includes legs 148, each of which measures approximately 1.625 inches in height and 11 inches in width. The legs 148 are for keeping a body 144' and a rigid item placed on the body 144' in the center of the wrapper during processing and transport of the envelope. The insert 14' is flexible such that the postal specifications for automation flats are met.

Here, it is understood that the envelope for enclosing the insert 14' measures approximately 9.5 inches in height and 12 inches in width. However, one skilled in the art will appreciate that the height and width dimensions of the insert 14' may vary according to the height and width dimensions of the selected wrapper 12. Generally, the overall height and width dimensions of the insert 14' are selected to be approximately 0.5 inches shorter than the corresponding dimensions of the selected wrapper 12 such that the insert can be inserted to the wrapper more easily using, for example, automated insertion equipment.

As described above with respect to certain embodiments, the insert is for positioning a rigid item at the center of a wrapper and ensuring that the filled wrapper meets flatness requirements as provided in Part 301 of the DMM.

Filling of the packaging 100 will now be described in more detail with reference to the insert of Fig. 3a and the wrapper formed using the envelope blank of Fig. 2. A rigid item 16 is removably affixed to the portion 1443 of the body 144 of the insert 14 located between the two openings 146, 147. The flaps 140, 142 are at their natural rest positions are shown in Fig. 3a. The flaps are then manually or mechanically folded. In an exemplary embodiment, the flaps are folded about the perforated edges of the body. The flaps are folded to swing towards the face of the body on which the rigid item is placed. As such, the flaps are moved out of their natural rest positions. A drawing of the rigid item 16 as affixed on the body of the insert 14 using an adhesive is shown in Fig. 5.

In the embodiment described above, the rigid item 16 is affixed on the body of the insert 14 using an adhesive. However, embodiments of the present invention are not limited thereto. For example, in another embodiment, a rigid item (such as, but not limited to, a box or container of cosmetic items such as a perfume bottle, a neutraceutical and/or a pharmaceutical container, and the like) is securely positioned in an indentation (or depression) located on the insert 14. Here, the indentation is sized and shaped to securely hold the rigid item.

Once the product 16 is affixed to the insert 14 and the flaps 140, 142 are folded over from their natural rest positions, both the insert 14 and the rigid item 16 are inserted to the wrapper 12. For example, the insert and the rigid item may be inserted to the wrapper such that the first face 144a of the body 144 of the insert 14 faces the panel 121 of the wrapper and the rigid item faces the panel 122 of the wrapper. In embodiments of the wrapper including the pad 126, the body 144 of the insert 14 protects one face of the rigid item. Further, the rigid item is positioned relative to the pad 126 such that the cushioning material of the pad 126 can protect an opposite face of the rigid item.

The flaps 140, 142 remain folded as the insert 14 is inserted to the wrapper. As folded, the flaps 140, 142 are not in their natural rest positions. Sometime after the insert is inserted to the wrapper (e.g., before or after the insert 14 is fully inserted to the wrapper), the flaps 140, 142 are released. As such, the flaps 140, 142 swing away from the body of the insert 14, to return to their natural rest positions. Here, the flaps 140, 142 engage the panel 122 of the wrapper 12. As such, the volume occupied by the insert 14 within the wrapper 12 expands at least to some degree. This expansion provides additional thickness at the peripheral regions of the wrapper 12 and, therefore, enhances the uniformity of the overall thickness of the wrapper 12, when filled. As such, upon sealing of the wrapper 12, the packaging 10 meets the flatness- and thickness-related requirements of an Automation Flat, as specified by the USPS.

According to described embodiments, packages may be stacked more stably because each of the packages has a substantially uniform thickness. Further, such packages meet the physical specifications of Automation Flats, as published by the USPS in Part 301 of the DMM. As described with respect to certain embodiments, a packaging apparatus includes a wrapper and a flexible insert, which are joined together using automated insertion equipment. Because such a packaging apparatus qualifies as an Automation Flat, it may be accepted for mailing by the USPS at a lower postal rate relative to packages that do not qualify as Automation Flats but instead qualify under other categories, such as USPS Parcels or Non-Machinable Flats.

It should be understood that various modifications may be made to the embodiments disclosed herein. Therefore, the above description should not be construed as limiting, but merely as exemplification of the various embodiments. By way of example, other embodiments may be used for packaging inserts for purposes other than processing and transport by postal mail. Those skilled in the art will envision other modifications within the scope and spirit of the claims appended thereto.

## Claims

1. An packaging apparatus comprising:
a flexible insert comprising:
a body having a first face and a second face opposite the first face;
a first flap at a first edge of the body; and
a second flap at a second edge of the body, the second edge of the body located opposite the first edge; and
a sealable wrapper comprising:
a first panel; and
a second panel,
the sealable wrapper sized to enclose the flexible insert;
the first face of the body of the flexible insert configured to engage the first panel of the sealable wrapper upon insertion of the flexible insert to the sealable wrapper; and
the first and second flaps of the flexible insert configured to, upon the insertion, swing from the body of the flexible insert to engage the second panel of the sealable wrapper such that a thickness of the packaging apparatus becomes substantially uniform.

2. The packaging apparatus of claim 1, wherein at least one portion of the first edge of the body is perforated and the first flap is joined to the body at the at least one perforated portion of the first edge.

3. The packaging apparatus of claim 2, wherein a notch is located at one end of the at least one perforated portion of the first edge and located between the body and the first flap, the notch being generally V-shaped.

4. The packaging apparatus of claim 2, wherein at least one portion of the second edge of the body is perforated and the second flap is joined to the body at the at least one perforated portion of the second edge.

5. The packaging apparatus of claim 4,
wherein a first notch is located at one end of the at least one perforated portion of the first edge and located between the body and the first flap, the first notch being generally V-shaped; and
wherein a second notch is located at one end of the at least one perforated portion of the second edge and located between the body and the second flap, the second notch being generally V-shaped.

6. The packaging apparatus of claim 1, wherein the body of the flexible insert has an opening therethrough, the opening located adjacent to the first flap.

7. The packaging apparatus of claim 6, wherein the body of the flexible insert has an second opening therethrough, the second opening located adjacent to the second flap.

8. The packaging apparatus of claim 1, wherein the second face of the body of the flexible insert is configured to receive a rigid item disposed thereon.

9. The packaging apparatus of claim 8,
wherein the body has an opening therethrough, the opening located adjacent to the first flap;
wherein the body has an second opening therethrough, the second opening located adjacent to the second flap; and
wherein the rigid item is disposed on the second face of the body between the first opening and the second opening.

10. The packaging apparatus of claim 8, wherein the rigid item comprises a compact disc (CD) jewel case.

11. The packaging apparatus of claim 8, wherein the rigid item comprises a digital versatile disc (DVD) storage case.

12. The packaging apparatus of claim 8, wherein the rigid item comprises a container for a cosmetic item.

13. The packaging apparatus of claim 8, wherein the rigid item comprises a container for a neutraceutical or pharmaceutical item.

14. The packaging apparatus of claim 8, wherein the sealable wrapper further comprises a pliable pad disposed on the second panel of the sealable wrapper to face the rigid item upon the insertion of the flexible insert to the sealable wrapper.

15. The packaging apparatus of claim 1, wherein the sealable wrapper further comprises a pliable pad disposed on the second panel of the sealable wrapper to face the body of the flexible insert upon the insertion of the flexible insert to the sealable wrapper.

16. The packaging apparatus of claim 15, wherein the pliable pad is adhered to the second face of the sealable wrapper.

17. The packaging apparatus of claim 15, wherein the pliable pad has a thickness of approximately 0.1 inch.

18. The packaging apparatus of claim 1, wherein the sealable wrapper is a booklet-style envelope.

19. The packaging apparatus of claim 1, wherein the thickness of the packaging apparatus is between approximately 0.009 inch and 0.75 inch upon the insertion of the flexible insert to the sealable wrapper.

20. A flexible insert comprising:
a body having a first face and a second face opposite the first face;
a first flap at a first edge of the body; and
a second flap at a second edge of the body, the second edge of the body located opposite the first edge;
the flexible insert configured to be inserted to an envelope including a first interior face and a second interior face opposite the first interior face, the envelope having a variable thickness;
the first face of the body of the flexible insert configured to engage the first interior face of the envelope upon insertion of the flexible insert to the envelope; and
the first and second flaps of the flexible insert configured to, upon the insertion, swing from the body of the flexible insert to contact the second interior face of the sealable envelope such that the thickness of the envelope becomes substantially uniform.

21. A packaging apparatus comprising:
a sealed wrapper comprising:
a first panel; and
a second panel,
the sealed wrapper enclosing a flexible insert and having a substantially uniform thickness; and
the flexible insert comprising:
a body having a first face engaging the first panel of the sealed wrapper and a second face opposite the first face;
a first flap at a first edge of the body and engaging the second panel of the sealed wrapper to form a first acute angle with the body; and
a second flap at a second edge of the body located opposite the first edge, and engaging the second panel of the sealed wrapper to form a second acute angle with the body.
